# EUROPÄISCHE PATENTSCHRIFT

(11) **EP 0 423 514 B1**
(45) Veröffentlichungstag und Bekanntmachung des Hinweises auf die Patenterteilung: **06.12.1995**
(21) Anmeldenummer: 90118435.8
(22) Anmeldetag: 26.09.1990
(51) Int. Cl.: C05F 17/02

(54) **Anlage zum Kompostieren von Rottegut**
Apparatus for composting putrifiable waste
Appareil de compostage de déchets putrescibles

(30) Priorität: 14.10.1989 DE 3934379
(43) Veröffentlichungstag der Anmeldung: 24.04.1991
(73) Patentinhaber: NOELL Service und Maschinentechnik GmbH, D-30853 Langenhagen (DE)
(72) Erfinder: Böddeker, Hans-Joachim, W-4400 Münster (DE)

(56) Entgegenhaltungen:
- EP-A- 0 250 617
- WO-A-90/08747

## Beschreibung

Die Erfindung betrifft eine Anlage zum Kompostieren von auf einem länglichen Feld aufgeschichtetem Rottegut, bei der das auf das Zuführende des Kompostierfeldes aufgebrachte Rottegut durch ein in Längsrichtung über das Kompostierfeld bewegbares Aufnahmegerät aufgenommen und über Fördereinrichtungen und ein unabhängig von dem Aufnahmegerät in Längsrichtung über das Kompostierfeld bewegbares Absetzgerät schrittweise in Richtung auf das dem Zuführende des Kompostierfeldes gegenüberliegende Abführende des Kompostierfeldes verlagert wird.

Bei derartigen Anlagen tritt infolge der bei der schrittweisen Verlagerung des Rottegutes über die Länge des Feldes auftretenden Verrottung ein Volumenschwund von bis zu 50 % ein, so daß die Höhe der Rottegutschicht in Richtung zum Abführende des Feldes stark abnimmt, wenn - wie dies bei bekannten Anlagen (DE-OS 19 17 268, DE-OS 30 20 011, EP 250 617) der Fall ist, die Verlagerungsschritte immer gleich groß sind. Die Kapazität des Kompostierfeldes wird dabei schlecht ausgenutzt.

Bei einer bekannten Anlage, bei der die Kompostierung in einem länglich rechteckigen, durch Betonwände begrenzten Trog stattfindet und ein Aufnahmegerät vorgesehen ist, das sich über die gesamte Breite des Troges erstreckt (DE-OS 24 33 367), hat man bereits ein mit dem Aufnahmegerät über Fördereinrichtungen verbundenes, querlaufendes Förderband vorgesehen, das unabhängig von dem Aufnahmegerät in Längsrichtung des Troges verfahrbar ist, so daß man das aufgenommene Rottegut trotz Volumenschwund wieder in voller oder auf größerer Höhe aufschütten kann. Bei derartigen Anlagen ist man wegen des Aufnahmegerätes auf eine relativ geringe Breite des Troges beschränkt, wenn man nicht mehrere Tröge nebeneinander bauen will, was sehr kostenaufwendig ist.

Bei Kompostieranlagen ohne Seitenwände, bei denen das Aufnahmegerät an einer das Kompostierfeld in Querrichtung überspannenden Brücke in deren Längsrichtung verfahrbar angeordnet ist und bei denen man daher in der Breite freizügiger ist, hat man dem Volumenverlust und der dadurch entstehenden Verminderung der Höhe des wieder abgesetzten Rottegutes dadurch entgegenzuwirken versucht, daß man den das vom Aufnahmegerät aufgenommene Rottegut unmittelbar übernehmenden, in Längsrichtung des Kompostierfeldes verlaufenden Förderer in seiner Länge veränderbar gemacht hat, so daß er das Rottegut in mehr oder weniger großem Abstand vom Aufnahmegerät abwerfen kann (EP 60 410 B1). Eine solche Ausbildung, bei der - wie auch bei der Anlage gemäß EP 250 617 - das Aufnahmegerät und das Absetzgerät an ein und derselben Brücke angeordnet sind, kann jedoch den tatsächlichen Volumenverlust nicht ausgleichen, weil die Längenveränderung aus technischen Gründen begrenzt ist und die Abwurfstelle in Querrichtung des Kompostierfeldes an die Bewegungen des Aufnahmegerätes gebunden ist.

Aufgabe der Erfindung ist es, auch bei Kompostieranlagen, bei denen das Kompostierfeld sehr breit ist und das Aufnahmegerät an einer das Kompostierfeld in Querrichtung überspannenden und in Längsrichtung über das Kompostierfeld verfügbaren Brücke verfahrbar angeordnet ist (DE-OS 30 20 011, EP 66 220 B1), diese Nachteile zu vermeiden, d. h. die Möglichkeit zu schaffen, daß das aufgenommene Rottegut in beliebiger gewünschter Höhe abgesetzt werden kann.

Erfindungsgemäß wird dies dadurch ermöglicht, daß das Aufnahmegerät und das Absetzgerät an voneinander unabhängigen Brücken verfahrbar angeordnet sind, die in bekannter Weise das Kompostierfeld in Querrichtung überspannen und unabhängig voneinander in Längsrichtung über das Kompostierfeld verfahrbar sind.

Infolge dieser Ausbildung der Kompostieranlage ist man völlig freizügig wie und wo man das aufgenommene Rottegut absetzt, beispielsweise bei schneller Querbewegung des Absetzgerätes in dünnen Schichten an das bereits abgesetzte Gut angefügt oder bei langsamerer Querbewegung in dickeren Schichten.

Bei einer bekannten Kompostieranlage, bei der das Rottegut auf einer ringförmigen Fläche zu einer Tafelmiete aufgeschüttet wird, hat man allerdings schon zwei unabhängig voneinander um einen zentralen Stützmast verschwenkbare Brücken vorgesehen, von denen die eine mit einem Gerät zum Aufsetzen der Miete und die andere mit Geräten zum Auflockern und Aufnehmen des Rottegutes zwecks Abbau der Miete ausgerüstet ist (DE-OS 30 04 982). Hierbei bleibt das Rottegut aber über die gesamte Rottezeit an der Stelle liegen, an der es aufgesetzt wurde, so daß die Probleme, die durch die Erfindung gelöst werden, bei der bekannten Anlage nicht vorliegen und daher eine Anregung im Sinne der erfindungsgemäßen Lösung von dieser Anlage nicht ausgehen konnte.

Erfindungsgemäß ist vorgesehen, die Aufnahmebrücke in eine außerhalb des Zufuhrendes des Kompostierfeldes vorgesehene Parkstellung und die Absetzbrücke in eine außerhalb des Abführendes des Kompostierfeldes vorgesehene Parkstellung verfahrbar zu machen. Durch das anfängliche Verharren der Aufnahmebrücke in der Parkposition kann das Zuführende des Kompostierfeldes von Anfang an durch die Absetzbrücke mit dem Absetzgerät beschickt werden. Ähnliches gilt für das Aufnehmen des Rottegutes bis zum Ende des Kompostierfeldes.

Ein besonderer Vorteil der erfindungsgemäß vorhandenen Bewegungsunabhängigkeit des Absetzgerätes von dem Aufnahmegerät ist die Möglichkeit, die Bewegung des Absetzgerätes in Abhängigkeit von der Menge des pro Zeiteinheit aufgenommenen Rottegutes selbsttätig so zu steuern, daß stets automatisch eine Miete von gewünschter Höhe entsteht. Dies wird dadurch erreicht, daß das Rottegut auf dem Wege vom Aufnahmegerät zum Absetzgerät gewogen wird. Wird die pro Zeiteinheit aufgenommene Rottegutmenge geringer, so wird entweder die Querbewegung des Absetzgerätes entlang der Absetzbrücke verringert oder der Bewegungsschritt, den die Absetzbrücke jeweils nach einer vollständigen Querbewegung des Absetzgerätes entlang der Brücke ausführt. Es können auch beide Bewegungen verändert werden. Die Steuerung des Absetzgerätes kann aber auch auf andere Art und Weise erfolgen, z. B. durch Messung der Rottegutaufschüttung mittels einer Ultraschallschranke.

Das Wiegen des aufgenommenen Gutes erfolgt vorzugsweise im Zuge eines außerhalb des Kompostierfeldes verlaufenden Förderers, der die auf den beiden Brücken vorgesehenen Förderbänder miteinander verbindet. Hier besteht auch die Möglichkeit, andere Maßnahmen an dem aufgenommenen Rottegut vorzunehmen, z. B. es mit Wasser oder Klärschlamm zu befeuchten, wenn es zu trocken geworden ist, oder es mechanisch zu bearbeiten, z. B. aufzulockern.

Dieser Verbindungsförderer wird vorzugsweise entlang einer Seitenkante des Kompostierfeldes geführt und weist einen Bandschleifenwagen oder ein anderes Gerät auf, das die Bewegungen der Absetzbrücke mitmacht und das von dem Aufnahmegerät kommende Rottegut auf das Förderband der Absetzbrücke abwirft oder überleitet.

Das Aufnahmegerät ist in bekannter Weise (DE-OS 30 20 011, EP 250 617 A1) an der Aufnahmebrücke so angeordnet, daß es, nachdem es sich von dem Abführende des Kompostierfeldes bei Hin- und Herbewegen an der Aufnahmebrücke und schrittweisem Vorbewegen dieser Brücke bis zum Zuführende des Kompostierfeldes durch die gesamte Kompostmiete hindurchgearbeitet hat, über die auf dem Kompostierfeld aufgesetzte Kompostmiete hinwegbewegbar oder so weit seitlich ausfahrbar ist, daß es neben der Kompostmiete entlangbewegt werden kann, um auf diese Weise wieder in die Ausgangsstellung am Abführende des Kompostierfeldes zu gelangen. Die Absetzbrücke muß dazu durch entsprechende Bewegung über das Kompostierfeld den Weg für die Aufnahmebrücke freimachen.

Die Absetzbrücke mit dem Absetzgerät kann auch zum Aufsetzen neuen Rottegutes auf das Zuführende des Kompostierfeldes verwendet werden, wenn man das Rottegut auf den Verbindungsförderer aufgibt. Hierzu ist der Verbindungsförderer an seinem Anlaufende mit einem Aufgabetrichter versehen. Ebenso kann die Aufnahmebrücke mit dem Aufnahmegerät im Zusammenwirken mit dem zugehörigen, auf der Aufnahmebrücke angeordneten Förderband und dem Verbindungsförderer zum Abführen des fertig kompostierten Rottegutes verwendet werden. In diesen beiden Fällen kann das jeweils nicht arbeitende Gerät mit seiner Brücke in eine außerhalb des Kompostierfeldes liegende Parkstellung verfahren werden.

Der Verbindungsförderer kann auch als geschlossenes Fördersystem um das Kompostierfeld herumgeführt sein, beispielsweise um mit dem Förderer zu Stellen zu gelangen, wo genügend Raum für die Behandlung des in der Umsetzung begriffenen Rottegutes vorhanden ist, z. B. vor einem Stirnende des Kompostierfeldes.

Diese Ausbildung des Verbindungsförderers ermöglicht weitere Behandlungsarten für das Rottegut. Z. B. kann man, wenn neben dem Kompostierfeld ein weiteres Kompostierfeld vorgesehen ist, über den zwischen den beiden Feldern hindurchgeführten Verbindungsförderer das zweite, z. B. für die Nachrotte bestimmte Feld, das zum mindesten mit einer Absetzbrücke versehen ist, aber auch eine Aufnahmebrücke aufweisen kann, mit Rottegut versorgen. Es ist auch möglich, die Brükken des ersten Kompostierungsfeldes über quer verlaufende Schienen vorübergehend auf das zweite Feld zu bringen, wenn aus kompostierungstechnischen Gründen das auf dem ersten Feld befindliche Rottegut eine gewisse Zeit lang sich unbehandelt überlassen bleiben soll.

Zweckmäßig ist es für einen solchen Fall, die an den Stirnenden/Zuführ- und Abführenden vorgesehenen Förderer und sonstigen Einrichtungen unterirdisch anzuordnen, so daß ein Überfahren mit den Ab- und Aufsetzbrücken möglich ist.

Diese verfahrensmäßige Koppelung der beiden Kompostierungsfelder (gegebenenfalls können es auch mehr als zwei Felder sein) ergeben auch günstige Möglichkeiten beim Einsatz des Bedienungspersonals zur Ersparung von Arbeitsschichten, wie dies nachstehend noch erläutert wird.

In der Zeichnung sind Kompostieranlagen mit Umsetzeinrichtungen gemäß der Erfindung schematisch dargestellt, und zwar zeigt
- Fig. 1: den Grundriß einer Anlage in der einfachsten Ausführung mit nur einem Kompostierfeld,
- Fig. 2: den Grundriß einer Anlage mit zwei Kompostierungsfeldern für unterschiedliche Verwendungsmöglichkeiten,
- Fig. 3: eine Stirnansicht einer Absetzbrücke mit Einrichtungen zur Übergabe von Rottegut,
- Fig. 4: einen Querschnitt durch eine Aufnahmebrücke mit Aufnahmegerät,
- Fig. 5: einen Querschnitt durch eine Aufnahmebrücke mit einem alternativen Aufnahmegerät,
- Fig. 6: den Querschnitt durch ein Kompostierfeld mit einer Aufnahmebrücke in kleinerem Maßstab, und
- Fig. 7-9: schematische Darstellungen der einzelnen Phasen des Kompostierungsvorganges und der entsprechenden Stellungen der Geräte, jeweils in Seiten- und Draufsicht.

Das Kompostierfeld ist mit 1 bezeichnet, sein Zuführende mit 2 und sein Abführende mit 3. Beiderseits des Kompostierfeldes sind Schienen 4 verlegt, auf denen zwei die Feldbreite überspannende Brücken über die gesamte Länge des Feldes und an beiden Enden etwas darüber hinaus verfahrbar sind, und zwar eine Absetzbrücke 5 und eine Aufnahmebrücke 6.

Die Absetzbrücke 5 ist mit einem sich über die gesamte Brückenlänge erstreckenden Förderband 7 und einem über die Brückenlänge verschiebbaren Absetzgerät 8 versehen, das das auf dem Förderband befindliche Gut an beliebiger Stelle von dem Förderband auf das Kompostierfeld 1 abwerfen kann.

Die Aufnahmebrücke 6 ist ebenfalls mit einem sich über die Brückenlänge erstreckenden Förderband 9 und mit einem über die Brückenlänge verfahrbaren Aufnahmegerät 10 versehen, das als Schaufelrad ausgebildet ist und das Rottegut von beliebiger Stelle des Kompostierfeldes 1 aufnehmen kann und auf das Förderband 9 wirft.

Seitlich neben dem Kompostierfeld 1 ist ein Verbindungsförderer 11 vorgesehen, der sich über die gesamte Länge des Kompostierfeldes erstreckt. Er nimmt das von dem Aufnahmegerät 10 auf das Förderband 9 geworfene Gut auf und befördert es zu der Absetzbrücke 5, die mit einer Abwurfeinrichtung 12 versehen ist, die das Gut von dem Verbindungsförderer 11 auf das Förderband 7 bewegt, von dem es dann durch das Absetzgerät 8 wieder auf das Kompostierfeld 1 gelangt.

Die Abssetzbrücke 5 kann auch zum Aufbringen des frischen Rottegutes auf das Kompostierfeld 1 verwendet werden, wenn man das frische Rottegut mittels des Trichters 13 auf den Bandförderer 11 aufbringt.

Die Arbeitsweise der Anlage ist wie folgt:
Vor dem Beschicken des Kompostierfeldes mit Rottegut wird die Aufnahmebrücke 6 am Zuführende 2 außerhalb des Feldes bei X abgestellt. Sodann wird Rottegut über den Trichter 13, den Verbindungsförderer 11, die als Bandschleifenwagen ausgebildete Abwurfeinrichtung 12, das Förderband 7 und die Absetzeinrichtung 8 auf einen ersten Abschnitt a des Kompostierfeldes so verteilt, daß auf diesem Abschnitt eine Tafelmiete von gewünschter Höhe entsteht, und zwar dadurch, daß die Absetzbrücke 5 schrittweise über diesen Abschnitt in Richtung auf das Abführende 3 verfahren und das Absetzgerät 8 nach jedem Schritt über die Länge der Absetzbrücke bewegt wird.

Der Abschnitt a des Kompostierfeldes 1 ist so bemessen, daß Rottegut einer bestimmten Produktionszeit, z. B. von 14 Tagen, darauf Platz findet.

Dann wird, nachdem das anfänglich aufgesetzte Rottegut dieser Tafelmiete eine bestimmte Zeit sich überlassen wurde, die Aufnahmebrücke 6 mit dem Aufnahmegerät 10 an die Miete herangefahren und von dem Zuführende 2 des Kompostierfeldes her wird das Rottegut durch ebenfalls schrittweises Vorbewegen der Aufnahmebrücke und nach jedem Schritt erfolgendes Bewegen des Aufnahmegerätes über die Länge der Aufnahmebrücke abgebaut. Das geschieht allerdings in einer zweiten Arbeitsschicht, da zum Wiederabsetzen die Absetzbrücke ebenfalls benötigt wird. Das aufgenommene Rottegut gelangt über das Förderband 9, den Verbindungsförderer 11 und das Förderband 7 der Absetzbrücke 5, die sich in gewissem Abstand von der Aufnahmebrücke 6 über dem Anfang eines bisher noch freien Abschnitts b des Kompostierfeldes, der sich an die vorhergehende Tafelmiete unmittelbar anschließt, befindet, über das Absetzgerät 8 wieder auf das Kompostierfeld. Mit dem Abbau der auf dem Abschnitt a liegenden Tafelmiete entsteht so auf dem Abschnitt b eine neue Tafelmiete, deren Höhe und Länge durch die unabhängig von der Schrittgröße der Aufnahmebrücke 6 wählbare Schrittgröße der Absetzbrücke 5 bestimmt wird.

Dadurch, daß das älteste Rottegut von dem Abschnitt a des Kompostierfeldes 1 zuerst wieder aufgenommen wird, entsteht hier vom Zuführende 2 her eine Freifläche, die in der ersten Arbeitsschicht in der bereits beschriebenen Weise mit frischem Rottegut wieder belegt wird. Die Aufnahmebrücke bleibt in dieser Zeit außer Betrieb.

Nach Beendigung der jeweiligen ersten Arbeitsschicht werden die beiden Brücken über die mit Rottegut belegten ersten Abschnitte, Absetzbrücke 5 über Abschnitte a und b, und Aufnahmebrücke 6 über Abschnitt a, hinweggefahren, und dann beginnt das Umsetzen des Rottegutes von neuem und zwar bis der Abschnitt a von z. B. 14 Tage altem Rottegut abgeräumt ist und dieses sich auf dem Abschnitt b befindet. Danach wird in gleicher Weise das auf dem Abschnitt b der Tafelmiete liegende Rottegut auf einen weiteren Abschnitt c des Kompostierfeldes verbracht und nach dem Freiwerden eines Teils des Abschnitts b erfolgt das Umsetzen eines Teils der auf dem Abschnitt a liegenden Tafelmiete auf den Abschnitt b, so daß auf den Abschnitt a wiederum eine Miete aus frischem Rottegut aufgeschüttet werden kann. Die Aufnahme- und Absetzgeräte sind leistungsmäßig so ausgelegt, daß für die Umsetzvorgänge die zweite Arbeitsschicht ausreicht.

Auf die beschriebene Weise wird schließlich in der Anfangsphase auch der letzte Abschnitt des Kompostierfeldes mit Rottegut belegt.

In einer dritten Arbeitsschicht wird das fertig gerottete Gut von dem Abschnitt c des Kompostierfeldes geräumt. Dazu wird die Absetzbrücke bis über das Abführende des Komstierfeldes hinaus auf den Parkabschnitt y und die Aufnahmebrücke bis an den Anfang des Abschnittes c verfahren, und das nunmehr von dem Aufnahmegerät aufgenommene Rottegut wird über den Verbindungsförderer 11 bei entsprechender Einstellung der Abwurfeinrichtung 12 an dem Ende des Verbindungsförderers zu weiterer Verwendung, z. B. zur Feinaufbereitung, ausgetragen. Ist der letzte Teil des Abschnittes c auf diese Weise freigelegt, so wird das von dem Aufnahmegerät vom Abschnitt b aufgenommene Rottegut wieder der Absetzbrücke zugeleitet, die diesen Teil des Abschnittes c mit Rottegut wieder belegt. Damit kann nunmehr der regelmäßige Kompostierbetrieb beginnen.

Die Absetzbrücke läuft dabei mit einem Abstand von der Aufnahmebrücke her, der der Breite der einzelnen Abschnitte entspricht. Diese Breite wird vom Zuführende bis zum Abführende immer geringer, weil das Volumen des Rottegutes während des Rottevorganges mehr und mehr schwindet, man die Miete aber auf gleicher Höhe halten will, um das Kompostierfeld gut auszunutzen, also einen möglichst hohen Durchsatz zu erzielen. Die Verfahrgeschwindigkeit der Absetzbrücke muß deshalb anders sein können als die der Aufnahmebrücke, und zwar geringer, weil sie in der Zeit, in der die Aufnahmebrücke einen Abschnitt des Kompostierfeldes überfährt, nur einen Abschnitt geringerer Länge überfahren muß. Infolge der vollkommenen Freizügigkeit der Bewegungen der Absetzbrücke im Vergleich mit der Aufnahmebrücke können diese Bedingungen erstmalig optimal erfüllt werden. Die Fahrgeschwindigkeit der Brücken und insbesondere der Absetzbrücke ist veränderbar. Damit wird z. B. erreicht, daß voluminöses, frisches Rottegut auf den größeren Abschnitt a des Kompostierfeldes verteilt werden kann.

Die Anzahl und Größe der einzelnen Abschnitte wird durch den gewünschten Ablauf der Rotte, insbesondere durch die Anzahl der während der Rotte durchzuführenden Umsetzvorgänge, die der Auflockerung und Belüftung des Rottegutes dienen, aber auch durch die Art, wie der Betrieb geführt werden kann, ob nur im Tagesbetrieb oder im Schichtbetrieb, bestimmt.

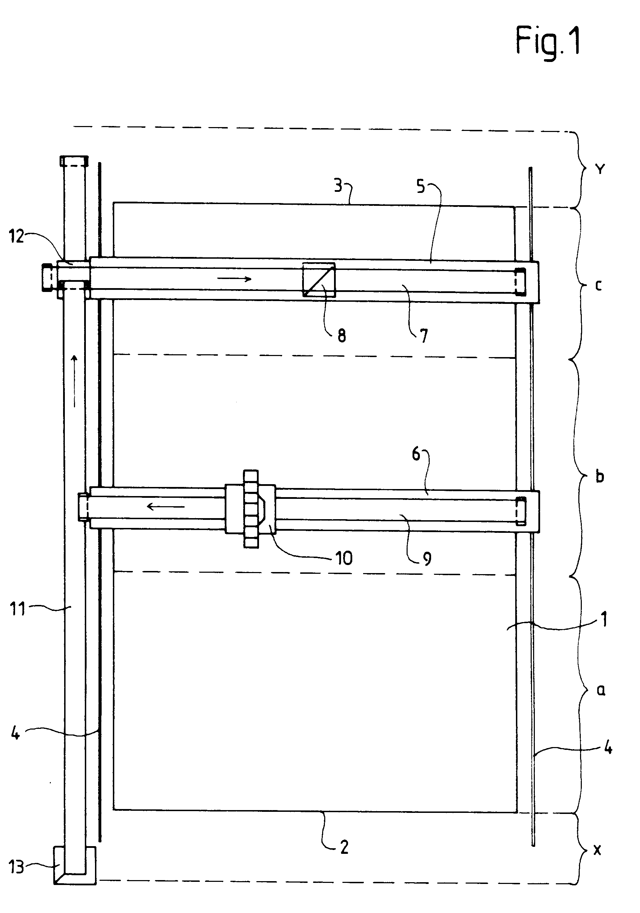

Wie aus vorstehender, sich im wesentlichen auf Fig. 1 beziehender Darstellung erkennbar, ist bei einem Kompostierfeld und je einer Aufnahme- und Absetzbrücke zur Durchführung aller notwendigen Vorgänge wie Aufsetzen - Umsetzen - Endaufnehmen ein Dreischichtbetrieb erforderlich. Da derartige Anlagen unter Einbeziehung der erfindungsgemäßen Mittel vollautomatisch arbeiten können, ist dazu nur sehr wenig Personal, z. B. nur eine Aufsichtsperson erforderlich. Bei Großanlagen oder dort, wo andere Gegebenheiten es erfordern, kann man, wenn man nur zwei Arbeitsschichten verfahren will, das Kompostierfeld mit einer zweiten Absetzbrücke versehen. Während des Abbaues des fertigen Rottegutes kann gleichzeitig frisches Rottegut abgesetzt werden. Das ist besonders günstig, da dabei die Rohgut- und Feingutaufbereitung zur gleichen Zeit arbeiten können, und nur das Umsetzen in einer zweiten Schicht durchgeführt werden muß, die nur einen Beobachter benötigt. Jedoch ist auch ein Einschichtbetrieb möglich, nämlich dann, wenn Absetz- und Aufnahmebrücken in doppelter Anzahl verwandt werden. Zweckmäßigerweise geschieht das mit einer Anlage, die zwei Kompostierfelder aufweist.

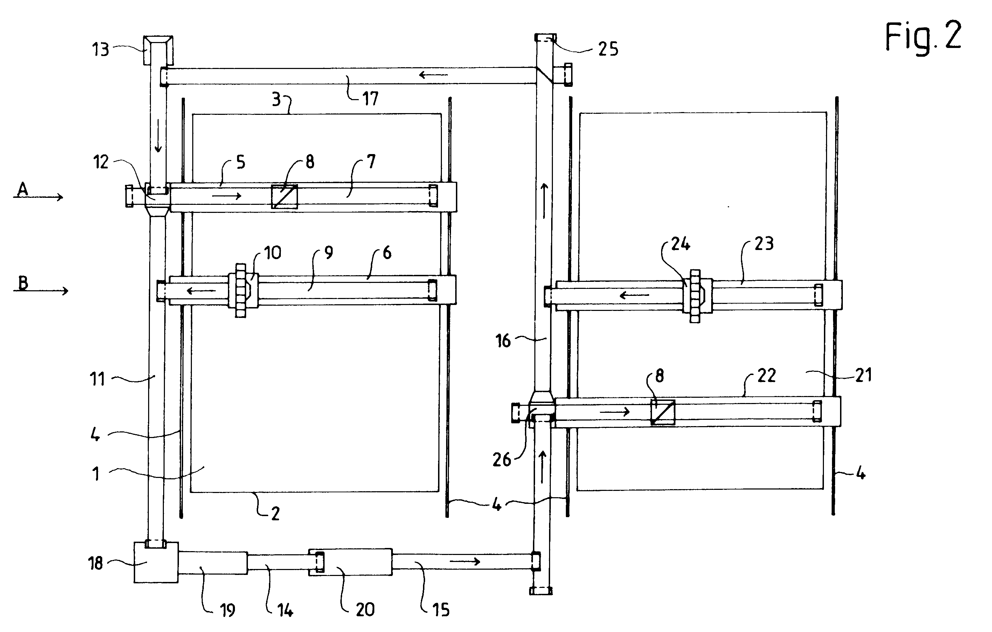

Die in Fig. 2 dargestellte Anlage weist zu diesem Zweck zwei nebeneinander angeordnete Kompostierfelder 1 und 21 auf. Das Feld 1 entspricht mit den Brücken 5 und 6 dem in Fig. 1 dargestellten Feld 1. Der Verbindungsförderer 11 arbeitet hier aber in entgegengesetzter Richtung, denn das von dem Aufnahmegerät 10 aufgenommene und über das Förderband 9 auf den Verbindungsförderer 11 gelangende Rottegut wird, ehe es durch die hier als Bandschleifenwagen ausgebildete Abwurfeinrichtung 12 auf die Absetzbrücke 5 kommt, mittels weiterer Förderer 14, 15, 16, 17 um das Kompostierfeld 1 herumgeführt, so daß es vom anderen Ende des Verbindungsförderers 11 her zu der Abwurfeinrichtung 12 gelangt. Dementsprechend ist auch der Aufgabetrichter 13 für das frische Rottegut am entgegengesetzten Ende des Verbindungsförderers 11 vorgesehen.

Bei dieser Anlage läuft das von dem Aufnahmegerät 10 aufgenommene Rottegut über eine dem Verbindungsförderer 11 nachgeschaltete Waage 18 sowie eine Feuchte-Meßeinrichtung 19 und danach über einen Förderer 14 zu einem Mischer 20, in dem es nach Maßgabe der Meßergebnisse durch Zumischung von Wasser, Klärschlamm od. dergl. auf die optimale Kompostierungsfeuchte eingestellt und außerdem aufgelockert wird. Es wird dann über die Förderer 15, 16, 17 und 11 auf die Absetzbrücke 5 und von dieser auf das Kompostierfeld 1 gebracht. Dabei können die von der Waage 18 ermittelten Werte bei der Steuerung der Absetzbrücke 5 verwendet werden, indem bei geringeren Werten der nächstfolgende Schritt der Brücke 5 vermindert oder die Bewegung des Absetzgerätes 8 entlang der Brücke verlangsamt wird. Die Steuerung der Absetzbrücke kann aber auch auf andere Art und Weise erfolgen, z. B. durch Ultraschallschranken, die die Aufschüttung des Rottegutes messen.

In weiterer Ausgestaltung der Erfindung kann der Förderer 16 auch dazu verwendet werden, auf dem Kompostierfeld 1 vorgerottetes Gut auf das benachbarte Kompostierfeld 21 zur Nachrotte zu bringen. Dieses Feld kann, wie das Feld 1 mit einer Absetzbrücke 22 und einer Aufnahmebrücke 23 versehen sein, und das hier fertigkompostierte Gut kann dann durch das Aufnahmegerät 24 wieder auf den Förderer 16 gebracht und von diesem zu weiterer Verwendung an dessen Ende 25 abgegeben werden. Die der Absetzbrücke 22 zugeordnete Abwurfeinrichtung 26 ist so ausgebildet, daß das über die Förderer 11, 14, 15 und 16 ankommende Rottegut auch an dieser Abwurfeinrichtung 26 vorbeigeleitet werden kann, wenn es nicht auf das Kompostierfeld 21, sondern entweder auf das Kompostierfeld 1 oder zur Abgabestelle 25 gebracht werden soll.

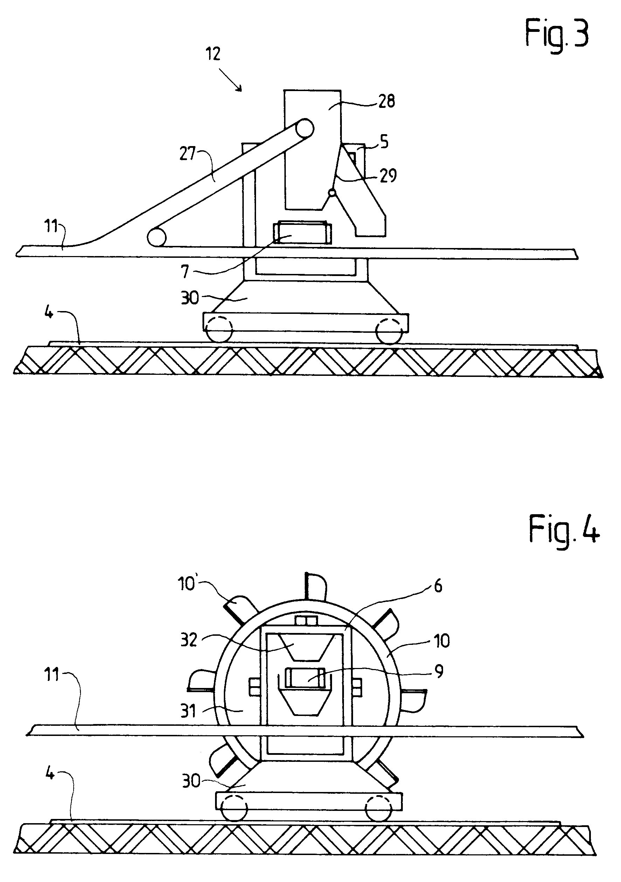

Auch die Abwurfeinrichtung 12 kann so ausgebildet sein, daß das von dem Aufgabetrichter 13 oder von dem Förderband 17 kommende Rottegut wahlweise auf das Förderband 7 der Absetzbrücke 5 gleitet oder auf dem Verbindungsförderer 11 weiterbewegt wird. Die Ausbildung dieser Einrichtungen ist am Beispiel der Abwurfeinrichtung 12, Fig. 3 (Ansicht entsprechend Pfeil A in Fig. 2) ersichtlich. Man erkennt, daß das Rottegut von der Bandschleife 27 des Bandförderer 11 in einen Trichter 28 fällt, in dem es je nach der Stellung einer Klappe 29 auf das Förderband 7 der Absetzbrücke 5 oder wieder auf den Verbindungsförderer 11 fällt, so daß auch frisches Rottegut von dem Aufgabetrichter 13 auf das zweite Kompostierfeld 21 gebracht werden kann. Mit 30 sind die an beiden Stirnenden der Brücke 5 vorgesehenen Fahrgestelle bezeichnet.

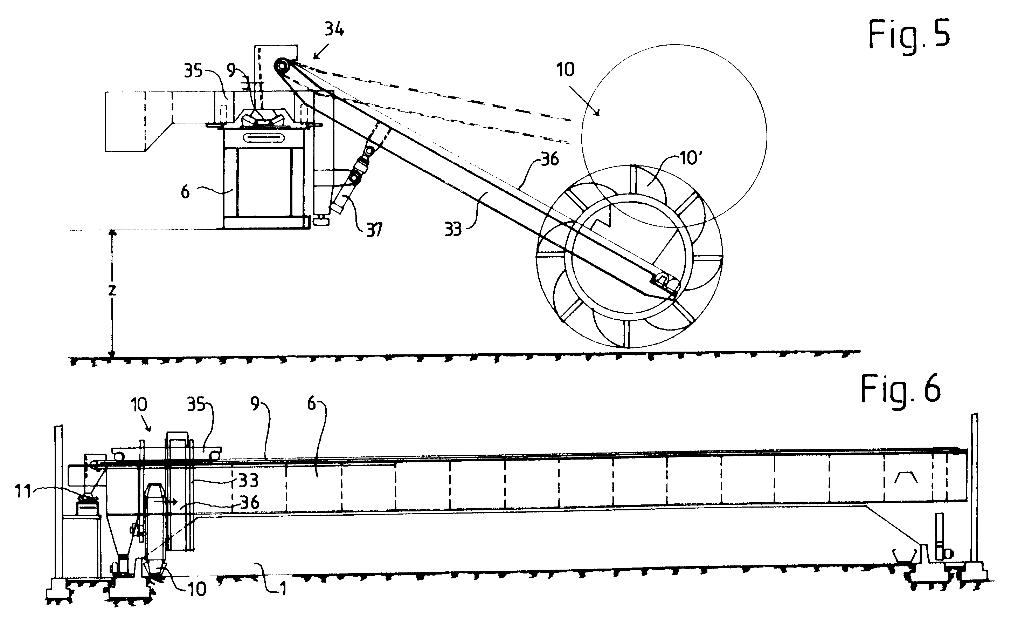

Fig. 4 zeigt in vereinfachter Form eine Stirnansicht der Aufnahmebrücke 6 (entsprechend Pfeil B in Fig. 2). Auf der im Profil rechteckigen Brücke 6 ist ein mit Rollen oder dergleichen versehenes Fahrgestell 31 angeordnet, daß auf der Brücke längsverfahrbar ist und um das das Aufnahmegerät 10 kreist. Dieses hat die Form eines Schaufelrades, wobei die Schaufeln 10′ oben in einen Trichter 32 entleeren. Der Trichter überführt das Rottegut auf den Förderer 9. Ebenfalls mit 30 ist hier das Fahrgestell der Brücke bezeichnet. Um an der Tafelmiete vorbeifahren zu können, muß an einer Längsseite des Kompostierfeldes Freiraum für das Schaufelrad des Aufnahmegerätes 10 gelassen werden. Günstiger ist eine Ausführung des Aufnahmegerätes 10, wenn dieses,wie die Fig. 5 und 6 zeigen, an einem Schwenkarm 33 und dieser erst mit seinem oberen Ende 34 an der Aufnahmebrücke 6 über einen Wagen 35 befestigt ist. Der Schwenkarm trägt dazu ein Förderband 36, das das von den Schaufeln 10′ aufgenommene Rottegut dem Förderband 9, das längs der brücke 6 angeordnet ist, zuführt. Mit einer Stützvorrichtung, z.B. einem Zylinder-Kolben-Aggregat 37, kann der Schwenkarm und damit das Aufnahmegerät 10 so weit angehoben werden, daß die Tafelmiete in Längs- und auch Querrichtung überfahren werden kann. Die Aufnahmebrücke hat eine lichte Höhe Z von z. B. 3,2 m.

Wie insbesondere Fig. 6 zeigt, ist das Schaufelrad des Aufnahmegerätes 10 seitlich des Förderbandes 36 angeordnet, wobei die Schaufeln 10′ auch seitlich auf das Förderband zu entleeren sind, wie das an sich bekannt ist.

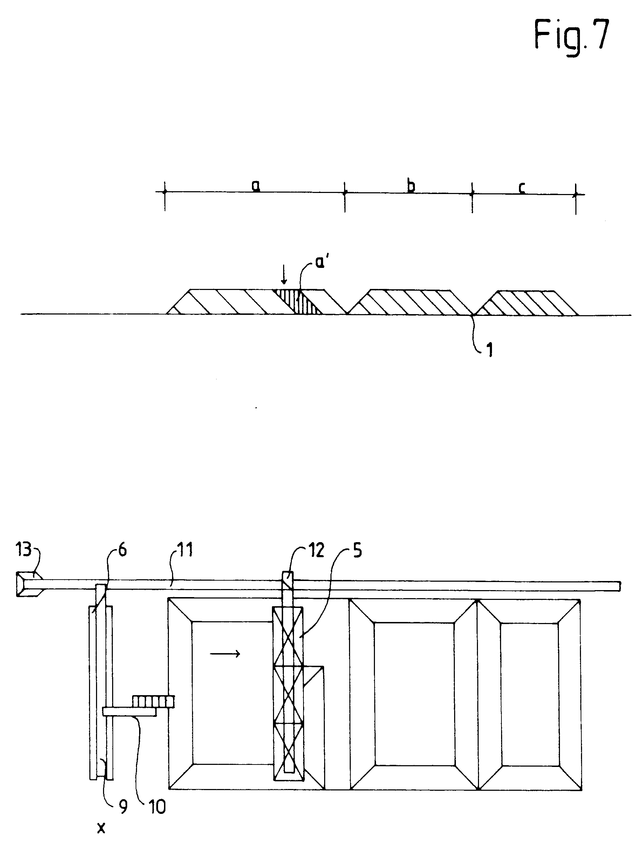

Mit Hilfe der Fig. 7 bis 9 wird nochmal der Einsatz der Aufnahme- und Absetzbrücken in bezug auf die einzelnen Rottephasen erläutert. Der obere Teil jeder Figur zeigt einen Querschnitt durch Tafelmieten auf dem Kompostierfeld, die drei Rottephasen a, b und c erkennen lassen. Dargestellt ist nicht die Neubeschickung einer Anlage, sondern Situationen im normalen Kompostierbetrieb.

Fig. 7 zeigt die Situation während einer ersten Arbeitsschicht, die Aufnahmebrücke 6 befindet sich in einer Parkposition. Über die Absetzbrücke 5 wird frisches Rottegut a′ gebracht und an das Rottegut der Vortagesschicht angesetzt. Die Abschnitte a, b und c sind auch als Rottephasen zu bezeichnen.

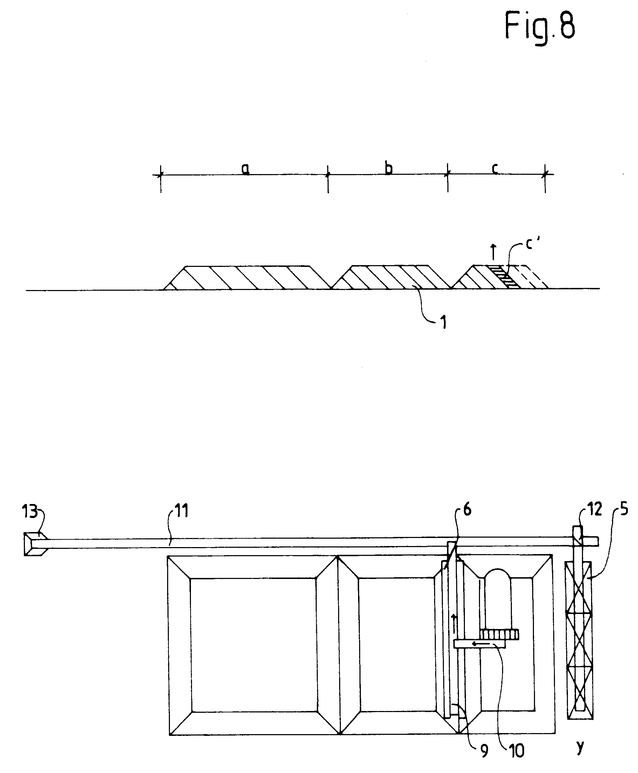

Entsprechend Fig. 8 wird gerade vom letzten Abschnitt c fertig gerottetes Gut c′ mittels der Aufnahmebrücke 6 aufgenommen und über das Förderband 11 bei entsprechender Stellung der Abwurfeinrichtung 12 ausgetragen und gelangt zu einer nicht dargestellten Feinaufbereitung. Hierzu wird die Absetzbrücke nicht benötigt, sie befindet sich in einer Parkposition.

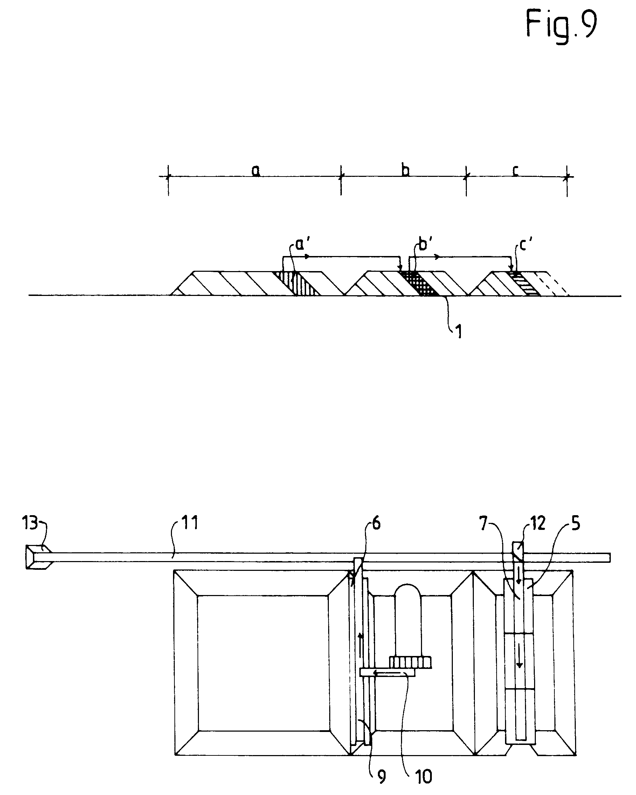

Fig. 9 zeigt schließlich das Umsetzen des Rottegutes in einer dritten Arbeitsschicht oder genauer gesagt in Teilarbeitsschichten. Von dem Abschnitt b wird nämlich in einer ersten Zeit das Rottegut b′ entfernt und dem Rottegut des Abschnittes c als c′ angefügt. In einer zweiten Zeit wird nunmehr vom ersten Abschnitt a vorgerottetes Gut a′ aufgenommen und als umgesetztes Rottegut b′ an die Stelle in Abschnitt b verbracht, von der vorher Rottegut entnommen und zum Abschnitt c verbracht wurde.

## Patentansprüche

1. Anlage zum Kompostieren von auf einem länglichen Feld aufgeschichtetem Rottegut, bei der das auf das Zuführende des Kompostierfeldes aufgebrachte Rottegut durch ein in Längsrichtung über das Kompostierfeld bewegbares Aufnahmegerät aufgenommen und über Fördereinrichtungen und ein unabhängig von dem Aufnahmegerät in Längsrichtung über das Kompostierfeld bewegbares Absetzgerät schrittweise in Richtung auf das dem Zuführende des Kompostierfeldes gegenüberliegende Abführende des Kompostierfeldes umgesetzt wird, **dadurch gekennzeichnet**, daß das Aufnahmegerät (10) und das Absetzgerät (8) an voneinander unabhängigen Brücken (6,5) verfahrbar angeordnet sind, die in bekannter Weise das Kompostierfeld (1) in Querrichtung überspannen und in Längsrichtung über das Kompostierfeld bewegbar sind.

2. Anlage nach Anspruch 1, **dadurch gekennzeichnet**, daß die Aufnahmebrücke (6) in eine außerhalb des Zuführendes (2) des Kompostierfeldes (1) vorgesehene Parkstellung (x) und die Absetzbrücke (5) in eine außerhalb des Abführendes (3) des Kompostierfeldes vorgesehene Parkstellung (y) verfahrbar ist.

3. Anlage nach Anspruch 1, **dadurch gekennzeichnet**, daß im Zuge der Fördereinrichtungen (9, 11, 7) eine Waage (18) vorgesehen ist, durch die die pro Zeiteinheit umgesetzte Rottegutmenge gemessen wird und die auf den Bewegungsantrieb der Absetzbrücke (5) und/oder des Absetzgerätes (8) derart einwirkt, daß beim Absetzen des Rottegutes automatisch eine Miete von gewünschter Höhe entsteht.

4. Anlage nach Anspruch 1, **dadurch gekennzeichnet**, daß im Zuge der Fördereinrichtungen (9, 11, 7) Einrichtungen (19, 20) vorgesehen sind, durch die die Feuchte des Rottegutes festgestellt, durch Mischen mit Wasser, Klärschlamm o. dgl. für die Rotte günstige Eigenschaften des Rottegutes erzielt werden und das Rottegut aufgelockert wird.

5. Anlage nach Anspruch 1, **dadurch gekennzeichnet**, daß im Zuge der Fördereinrichtungen (9, 11, 7) ein außerhalb des Kompostierfeldes (1) und entlang einer Seitenkante desselben geführter Verbindungsförderer (11) vorgesehen ist, der ein auf der Aufnahmebrücke (6) vorgesehenes Förderband (9) mit einem auf der Absetzbrücke (5) vorgesehenen Förderband (7) verbindet.

6. Anlage nach Anspruch 5, **dadurch gekennzeichnet**, daß der Verbindungsförderer (11) an seinem Anlaufende mit einem Aufgabetrichter (13) für frisches Rottegut und an seinem Ablaufende mit einer Abführeinrichtung für behandeltes Rottegut versehen ist und daß eine Vorrichtung (12), durch die der Verbindungsförderer (11) mit dem auf der Absetzbrücke (5) vorgesehenen Förderband (7) verbunden ist, mit Einrichtungen (28, 29) versehen ist, durch die das auf dem Verbindungsförderer herangeführte Rottegut wahlweise auf das auf der Absetzbrücke vorgesehene Förderband abgeführt wird oder dafür sorgt, daß es auf dem Verbindungsförderer bleibt.

7. Anlage nach Anspruch 5, **dadurch gekennzeichnet**, daß der Verbindungsförderer (11) von der Aufnahmebrücke (6) auf Umwegen, z. B. mittels um das Kompostierfeld (1) herum angeordneter Förderer (14, 15, 16, 17) zu der Absetzbrücke (5) geführt ist, so daß das geförderte Rottegut von der der Aufnahmebrücke abgewandten Seite der Absetzbrücke her zu dieser gelangt.

8. Anlage nach den Ansprüchen 1 und 7, **dadurch gekennzeichnet**, daß neben dem Kompostierfeld (1) ein weiteres Kompostierfeld (21) vorgesehen ist, das ebenfalls mit einer Aufnahmebrücke (23) und einer Absetzbrücke (22) ausgestattet ist, wobei die Brücken an einen (16) der um das erste Kompostierfeld (1) herum angeordneten Förderer (14, 15, 16, 17) angeschlossen sind, der zwischen den beiden Kompostierfeldern verläuft.

9. Anlage nach den Ansprüchen 2 und 8, **dadurch gekennzeichnet**, daß die Brücken (5, 6) aus ihren Parkstellungen (x, y) oder die Brücken (22, 23) aus ihren Parkstellungen auf Parkstellungen des jeweils benachbarten Kompostierfeldes (1, 21) verfahrbar sind.

10. Anlage nach Anspruch 9, **dadurch gekennzeichnet**, daß die Brücken (5, 6 und 22, 23) von den Parkstellungen auf dem jeweils benachbarten Kompostierfeld (1 bzw. 21) aus zusätzlich oder anstatt zu den dem einen Kompostierfeld (1 oder 21) zugeordneten Brücken über das Kompostierfeld Rottegut aufnehmend oder absetzend verfahrbar sind.

11. Anlage nach Anspruch 9, **dadurch gekennzeichnet**, daß der Förderer (17) oder die Förderer (14, 15) mit den Einrichtungen (19, 20) so angeordnet sind, z. B. unterirdisch, daß die genannten Förderer und Einrichtungen von den Brücken (5, 6 und 22, 23) überfahrbar sind.

## Claims

1. Apparatus for composting fermentable material spread over a rectangular fermentation table, by which the fermentable material arriving at the reception end of the fermentation table is received by a reception device which can be moved longitudinally over the fermentation table, and by means of conveying devices as well as a depositing device which is independently movable of the reception device in a longitudinal direction over the fermentation table, turned over step by step towards the discharge end at that end of the fermentation table opposite to the reception end, **characterised** in that the reception device (10) and depositing device (8) are movably arranged on independent bridges (6, 5), which transversely straddle the fermentation table (1) in the known manner, and which is movable in the longitudinal direction over the fermentation table.

2. Apparatus according to claim 1, **characterised** in that the reception bridge (6) can be moved to a parking position (x) beyond the reception end (2) of the fermentation table (1) and the depositing bridge (5) can be moved to a parking position (y) beyond the discharge end (3) of the fermentation table.

3. Apparatus according to claim 1, **characterised** in that a weighing machine (18) is provided on the route of the conveying devices (9, 11, 7), by means of which the amount of fermentation material turned over per unit of time is measured and which acts on the travel drive of the depositing bridge (5) and/or the depositing device (8) in such a way that a fermention windrow of the desired height is created automatically during the depositing of the fermentation material.

4. Apparatus according to claim 1, **characterised** in that devices (19, 20) are provided on the route of the conveying devices (9, 11, 7), by means of which the wetness of the fermentation material is determined, and through mixing with water, sewage sludge or similar, fermentation material properties favourable to the fermentation process are achieved and the fermentation material is loosened.

5. Apparatus according to claim 1, **characterised** in that on the route of the conveying devices (9, 11, 7) beyond the fermentation table (1) and running alongside one side of the same is provided a connecting conveyor (11), which connects a conveying belt (9) provided on the reception bridge (6) with a conveying belt (7) provided on the depositing bridge (5).

6. Apparatus according to claim 5, **characterised** in that the connecting conveyor (11) is provided at its receiving end with a feed hopper (13) for new fermentation material and at its discharging end with a discharging device for treated fermentation material, and that a device (12) which connects the connecting conveyor (11) with the conveying belt (7) provided on the depositing bridge (5) is provided with devices (28, 29), by means of which the fermentation material conveyed on the connecting conveyor can be optionally discharged onto the conveying belt provided on the depositing bridge or retained on the connecting conveyor.

7. Apparatus according to claim 5, **characterised** in that the connecting conveyor (11) takes a roundabout route from the reception bridge (6) to the depositing bridge (5), for instance via conveyors (14, 15, 16, 17) arranged around the fermentation table (1), so that the conveyed fermentation material arrives at the depositing bridge at the end furthest away from the reception bridge.

8. Apparatus according to claims 1 and 7, **characterised** in that arranged next to the fermentation table (1) is a second fermentation table (21), which is also provided with a reception bridge (23) and a depositing bridge (22), the bridges being connected to a conveyor (14, 15, 16, 17) arranged around the first fermentation table (1), and which runs between both fermentation tables.

9. Apparatus according to claims 2 and 8, **characterised** in that the bridges (5, 6) can be moved from their parking positions (x, y) or the bridges (22, 23) from their parking positions to parking positions of the respective adjacent fermentation tables (1, 21).

10. Apparatus according to claim 9, **characterised** in that the bridges (5, 6 and 22, 23) can be moved from the parking positions of the respective adjacent fermentation table (1 or 23) additionally or alternatively to the bridges allocated to the respective fermentation table (1 or 21), over the fermentation table to receive or deposit the fermentation material.

11. Apparatus according to claim 9, **characterised** in that the conveyor (17) or conveyors (14, 15) are arranged with the devices (19, 20) in such a way, for instance below ground, that the said conveyors and devices can be overpassed by the bridges (5, 6 and 22, 23).

## Revendications

1. Appareil pour le compostage de déchets putrescibles superposés sur un terrain oblong, dans lequel appareil les déchets putrescibles, déposés au bout d'alimentation du terrain de compostage, sont pris par un mécanisme de ramassage, mobile en sens longitudinal au-dessus du terrain de compostage, et graduellement transposés par des dispositifs de transport et un mécanisme à déposer, mobile en sens longitudinal au-dessus du terrain de compostage, en direction du bout d'enlevement du terrain de compostage opposé au bout d'alimentation du terrain de compostage, **caractérisé en ce** que le mécanisme de ramassage (10) et le mécanisme à déposer (8) sont montés déplaçables sur des ponts (6, 5) indépendants l'un de l'autre, lesquels ponts franchissent d'une manière connue en sens transversal le terrain de compostage (1) et sont mobiles en sens longitudinal au-dessus du terrain de compostage.

2. Appareil selon la revendication 1, **caractérisé en ce** que le pont de ramassage (6) est déplaçable à une position de stationnement (x) prévue en dehors du bout d'alimentation (2) du terrain de compostage (1) et le pont à deposer (5) à une position de stationnement (y) prévue en dehors du bout d'évacuation (3) du terrain de compostage.

3. Appareil selon la revendication 1, **caractérisé en ce** qu'une balance (18) est prévue dans le parcours des dispositifs de transport (9, 11, 7), par laquelle la quantité de déchets putrescibles transposée par unité de temps est mesurée, laquelle balance agit sur le mouvement du pont à déposer (5) et/ou du mécanisme a déposer (8) de sorte qu'un tas de la hauteur souhaitée se forme automatiquement au dépit des déchets putrescibles.

4. Appareil selon la revendication 1, **caractérisé en ce** que, dans le parcours des dispositifs de transport (9, 11, 7), sont prévus des dispositifs (19, 20) par lesquels l'humidité des déchets putrescibles est déterminée, des propriétés des déchets putrescibles favorables à la fermentation sont obtenues grâce au mélange avec de l'eau et des boues de curage ou analogues et les déchets putrescibles sont ameublis.

5. Appareil selon la revendication 1, **caractérisé en ce** que, dans le parcours des dispositifs de transport (9, 11, 7), est prévu un transporteur de raccordement (11), amené en dehors du terrain de compostage (1) et le long d'un bord latéral de celui-ci, lequel transporteur de raccordement relie une bande transporteuse (9) prévue sur le pont de ramassage (6) à une bande transporteuse (7) prévue sur le pont à déposer (5).

6. Appareil selon la revendication 5, **caractérisé en ce** que le transporteur de raccordement (11) est muni, à son extrémité de commande, d'un entonnoir d'alimentation (13) pour des déchets putrescibles frais et, à son extrémité d'issue, d'un dispositif d'enlevement pour les déchets traités et en ce qu'un engin (12), par lequel le transporteur de raccordement (11) est relié à la bande transporteuse (7) prévue sur le pont à déposer (5), est équipé de dispositifs (28, 29) par lesquels les déchets putrescibles apportés au moyen du transporteur de raccordement sont énlevés par la bande transporteuse prévue sur le pont à déposer ou, au choix, restent sur le transporteur de raccordement.

7. Appareil selon la revendication 5, **caractérisé en ce** que le transporteur de raccordement (11) est amené indirectement du pont de ramassage (6) au pont à déposer (5), par exemple au moyen de transporteurs (14, 15, 16, 17) placés autour du terrain de compostage (1), de façon que les déchets putrescibles transportés arrivent du cité du pont à déposer détourné du pont de ramassage au pont à déposer.

8. Appareil selon les revendications 1 et 7, **caractérisé en ce** que près du terrain de compostage (1) est prévu un autre terrain de compostage (21) qui est aussi pourvu d'un pont de ramassage (23) et d'un pont à déposer (22), où les ponts sont raccordés à un (16) des transporteurs (14, 15, 16, 17) placés autour du premier terrain de compostage (1), lequel transporteur (16) court entre les deux terrains de compostage.

9. Appareil selon les revendications 2 et 8, **caractérisé en ce** que les ponts (5, 6) sont déplaçables de leurs positions de stationnement (x, y) ou en ce que les ponts (22, 23) sont déplaçables de leurs positions de stationnement, les uns et les autres ponts aux positions de stationnement du terrain de compostage respectivement voisin (1, 21).

10. Appareil selon la revendication 9, **caractérisé en ce** que les ponts (5, 6 et 22, 23) sont déplaçables de leurs positions de stationnement au terrain de compostage respectivement voisin (1 ou 21) en plus ou au lieu des ponts destinés à un terrain de compostage (1 ou 21) pour prendre ou déposer des déchets putrescibles sur le terrain de compostage.

11. Appareil selon la revendication 9, **caractérisé en ce** que le transporteur (17) ou les transporteurs (14, 15) avec les dispositifs (19, 20) sont disposés par exemple dans les souterrains de façon que les transporteurs et les dispositifs sont traversables par les ponts (5, 6 et 22, 23).
